# EUROPÄISCHE PATENTANMELDUNG

(11) **EP 4 155 369 A1**
(43) Veröffentlichungstag der Anmeldung: **29.03.2023**
(21) Anmeldenummer: 21020477.2
(22) Anmeldetag: 23.09.2021
(51) Int. Cl.: C10J 3/84, C10J 3/52

(54) **REAKTOR UND VERFAHREN ZUR ERZEUGUNG EINES PRODUKTGASES DURCH VERGASUNG EINES KOHLENWASSERSTOFFHALTIGEN BRENNSTOFFS**

(71) Anmelder: L'Air Liquide Société Anonyme pour l'Etude et l'Exploitation des Procédés Georges Claude, 75321 Paris (FR)
(72) Erfinder: Weigand, Peter, 60439 Frankfurt am Main (DE); Ritter, Sven, 60439 Frankfurt am Main (DE)
(74) Vertreter: Stang, Stefan

(57) **Zusammenfassung**

Die vorliegende Erfindung betrifft einen Reaktor und ein Verfahren zur Erzeugung eines Produktgases, insbesondere eines Synthesegases, durch Vergasung eines kohlenwasserstoffhaltigen Brennstoffs. Der Reaktor verfügt über einen Reaktionsraum und einen Abkühlraum, und einen Zwischenboden welcher den Reaktionsraum räumlich vom Abkühlraum trennt. Durch den Zwischenboden hindurch erstreckt sich eine Gasdurchführung zur Durchführung des abzukühlenden Produktgases vom Reaktionsraum in den Abkühlraum. Erfindungsgemäß ist vorgesehen, dass im Abkühlraum des Reaktors ein Formkörper angeordnet ist, welcher sich zumindest teilweise über eine freie Querschnittsfläche des Abkühlraums erstreckt und eine Teilversperrung der Querschnittsfläche des Abkühlraums bewirkt, wobei der Formkörper derart angeordnet ist, dass zumindest ein Teil des im Abkühlraum abgekühlten Produktgases nach Umströmen des Formkörpers anschließend über den Kaltgasauslass des Abkühlraums aus dem Reaktor austritt. Durch die Anordnung des Formkörpers wird eine verbesserte und gleichmäßigere Kühlung des Zwischenbodens erzielt.

## Beschreibung

### Gebiet der Erfindung

Die Erfindung betrifft einen Reaktor und ein Verfahren zur Erzeugung eines Produktgases, insbesondere eines Synthesegases, durch Vergasung eines kohlenwasserstoffhaltigen Brennstoffs. Die Erfindung betrifft ferner die Verwendung des erfindungsgemäßen Reaktors für die Herstellung von Synthesegas aus kohlenwasserstoffhaltigen Brennstoffen.

### Stand der Technik

In bekannten Reaktoren zur Vergasung, insbesondere Flugstromvergasung, von kohlenwasserstoffhaltigen Brennstoffen mit direkter Abkühlung wird heißes Produktgas aus dem Reaktionsraum üblicherweise von oben nach unten in einen Abkühlraum geführt. Die direkte schnelle Abkühlung des häufig eine Temperatur von über 1000 °C aufweisenden Produktgases mit einem Kühlmedium wird im fachmännischen Jargon auch als "Quench" bezeichnet, und der Abkühlraum des Reaktors wird entsprechend als "Quenchraum" bezeichnet. Zur direkten Abkühlung des Produktgases wird dieses beispielsweise über eine Zerstäubungsvorrichtung in den Abkühlraum eingebracht oder durch einen gekühlten Eintritt in den Abkühlraum geleitet. Anschließend wird das Produktgas im Abkühlraum mit einem Spray des Kühlmediums gekühlt, um es rasch abzukühlen. Als Kühlmedium kommt üblicherweise Wasser zum Einsatz.

Alternativ dazu wird das Produktgas durch eine Abtauchung aus Kühlmedium geführt oder mit kaltem Gas beaufschlagt.

Typischerweise wird das abgekühlte Gas anschließend seitlich aus dem Abkühlraum abgezogen.

Der Reaktionsraum und der Abkühlraum des Reaktors sind durch einen tragenden Zwischenboden voneinander getrennt. Der Reaktionsraum ist ferner zum Schutz vor den herrschenden hohen Temperaturen üblicherweise innen mit einer hochtemperaturbeständigen Ausmauerung versehen.

Ein Beispiel für einen aus dem Stand der Technik bekannten Reaktor dieser Bauart, geeignet zur Flugstromvergasung eines kohlenwasserstoffhaltigen Brennstoffs, ist in der DE 10 2011 007 806 A1 offenbart.

### Beschreibung der Erfindung

Durch die Strömungsführung, die sich durch den Abzug des gekühlten Gases aus dem Abkühlraum über einen seitlichen Auslass ergibt, strömt das gekühlte Gas auf möglichst direktem Weg zum beziehungsweise in den Auslass. Dabei wird, wie die Erfinder im Rahmen von CFD Simulationen gefunden haben, der Bereich unmittelbar am und unterhalb des tragenden Zwischenbodens kaum durchströmt.

Durch die sich daraus ergebende geringe Strömungsgeschwindigkeit oberhalb des seitlichen Auslasses, sowie unterhalb des und besonders in der Nähe des Zwischenbodens, wird der Zwischenboden nur unzureichend gekühlt. Ferner wurde gefunden, dass die Strömungsgeschwindigkeiten des gekühlten Gases in dem Bereich in der Nähe und am seitlichen Auslasses wesentlich höher sind als in einem von diesem Auslass entfernten Bereich.

Dies führt dazu, dass der Zwischenboden insgesamt nicht nur unzureichend, sondern auch unterschiedlich stark durch das strömende Produktgas gekühlt wird. Dadurch ergeben sich über die gesamte Fläche des Zwischenbodens betrachtet große Unterschiede im Wärmeübergang, was demensprechend zu unterschiedlich großen Temperaturen und daraus resultierend Wärmespannungen im Zwischenboden führt. Insbesondere ergeben sich große Unterschiede in den Wärmeübergangskoeffizienten am Zwischenboden zwischen dem relativ gut durchströmten Bereich in der Nähe des seitlichen Auslasses und dem Auslass abgewandten Bereich mit geringer Strömung. Dies führt im Bereich mit niedriger Wärmeübertragung vom strömenden Gas auf den Zwischenboden dazu, dass dort weniger Wärme in den Abkühlraum abgeführt wird und der Zwischenboden an diesen Stellen entsprechend signifikant heißer werden kann.

Dies führt in nachteiliger Weise dazu, dass die im Zwischenboden zu erwartenden hohen Temperaturen im Zuge der Auslegung des Reaktors zu berücksichtigen sind. Mit anderen Worten, um den Reaktor sicher auszulegen, sind mit den Reaktionsmedien in Kontakt stehende Materialien erforderlich, welche über einen längeren Zeitraum höheren Temperaturen und größeren Temperaturunterschieden sicher standhalten. Auch sind die Dimensionen (beispielsweise die Dicke) der entsprechenden Bauteile größer zu wählen, was wiederum eine schlechtere Kühlung zur Folge hat. Ferner ergibt sich als mögliche Anforderung eine dickere Schicht der innenseitigen Ausmauerung des Reaktionsraums, um den Wärmeeintrag vom Reaktionsraum in den Abkühlraum zu begrenzen. Grundsätzlich muss die zulässige Auslegungstemperatur der mit den Reaktionsmedien in Kontakt stehenden Materialien ausreichend hoch gewählt werden, um bei Versagen der Ausmauerung eine ausreichend hohe Reserve zu haben. In Summe ergeben diese Einzelaspekte den Nachteil, dass höhere Kosten für die Realisierung des Reaktors, insbesondere höhere Investitionskosten (CAPEX), erforderlich werden.

Allgemein ist es daher eine Aufgabe der vorliegenden Erfindung, die vorgenannten Nachteile des Standes der Technik zumindest teilweise zu überwinden.

Insbesondere besteht eine Aufgabe der vorliegenden Erfindung darin einen Reaktor bereitzustellen, in dem der den Reaktionsraum und den Abkühlraum trennende Zwischenboden im Betrieb gleichmäßiger gekühlt wird.

Eine weitere Aufgabe der vorliegenden Erfindung besteht darin einen Reaktor bereitzustellen, in dem der Zwischenboden im Betrieb besser gekühlt und dadurch weniger heiß wird, insbesondere niedrigere maximale Temperaturen (Temperaturspitzen) aufweist.

Eine weitere Aufgabe der vorliegenden Erfindung besteht darin einen Reaktor bereitzustellen, welcher in Bezug auf die Temperatur der Reaktionsmedien kontaktierenden Materialien eine Auslegung mit niedrigerer Temperatur als bekannte Reaktoren ermöglicht.

Eine weitere Aufgabe der vorliegenden Erfindung besteht darin einen Reaktor bereitzustellen, welcher in Bezug auf die Dimensionierung der Bauteile der Reaktionsmedien kontaktierenden Materialien geringere Dicken dieser Bauteile im Vergleich zu bekannten Reaktoren ermöglicht.

Eine weitere Aufgabe der vorliegenden Erfindung besteht darin einen Reaktor bereitzustellen, welcher eine weniger dicke Ausmauerung im Bereich des Zwischenbodens des Reaktionsraums im Vergleich zu bekannten Reaktoren ermöglicht.

Eine weitere Aufgabe der vorliegenden Erfindung besteht darin ein Verfahren bereitzustellen, welches zumindest eine der vorgenannten Aufgaben zumindest teilweise löst.

Ein Beitrag zur mindestens teilweisen Lösung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch einen Reaktor zur Erzeugung eines Produktgases, insbesondere eines Synthesegases, durch Vergasung eines kohlenwasserstoffhaltigen Brennstoffs, aufweisend
- einen Reaktionsraum, aufweisend eine Vorrichtung zum Einlass von Reaktionsmedien, insbesondere eines Brennstoffs und eines Oxidationsmittels für die partielle Oxidation des Brennstoffs mit dem Oxidationssmittel zu einem heißen Produktgas;
- einen Abkühlraum für die Abkühlung des heißen Produktgases durch direkten Wärmeaustausch mit einem Kühlmedium;
- ein Kühlmedieneinlass für die Zufuhr von frischem Kühlmedium zum Abkühlraum;
- einen seitlich am Abkühlraum angeordneten Kaltgasauslass zum Abziehen des im Abkühlraum abgekühlten Produktgases und optional eines Teils des durch die Abkühlung des Produktgases erwärmten Kühlmediums aus dem Abkühlraum;
- einen Zwischenboden, welcher den Reaktionsraum und den Abkühlraum räumlich voneinander trennt;
- eine im Zwischenboden angeordnete und sich durch den Zwischenboden hindurch erstreckende Gasdurchführung für die Durchführung des abzukühlenden Produktgases vom Reaktionsraum zum Abkühlraum;
- ein Kühlmedienauslass zum Abziehen von überschüssigem Kühlmedium aus dem Abkühlraum; und
- einen im Abkühlraum angeordneten Formkörper, welcher sich teilweise über eine freie Querschnittsfläche des Abkühlraums erstreckt und eine Teilversperrung der Querschnittsfläche des Abkühlraums bewirkt, wobei der Formkörper derart angeordnet ist, dass zumindest ein Teil des abgekühlten Produktgases nach Umströmen des Formkörpers anschließend über den Kaltgasauslass des Abkühlraums aus dem Reaktor austritt.

Alternativ formuliert umfasst der Reaktor einen im Abkühlraum angeordneten Formkörper, welcher sich teilweise über eine freie Querschnittsfläche des Abkühlraums erstreckt und eine Teilversperrung der Querschnittsfläche des Abkühlraums bewirkt, wobei der Formkörper derart angeordnet ist, dass der Formkörper von zumindest einem Teil des abgekühlten Produktgases umströmbar ist, und das abgekühlte Produktgas nach Umströmung des Formkörpers über den Kaltgasauslass des Abkühlraums aus dem Reaktor abziehbar ist.

Erfindungsgemäß ist vorgesehen, dass im Abkühlraum des Reaktors ein Formkörper angeordnet ist, welcher sich teilweise über eine freie Querschnittsfläche des Abkühlraums erstreckt. Dadurch, dass sich der Formkörper teilweise über die freie Querschnittsfläche des Abkühlraums erstreckt, wird eine Teilversperrung der Querschnittsfläche des Abkühlraums bewirkt.

Der Formkörper ist dabei derart angeordnet, dass zumindest ein Teil des abzukühlenden Produktgases, nachdem es durch die im Zwischenboden des Reaktors angeordnete Gasdurchführung passiert hat und durch den direkten Kontakt mit dem Kühlmedium gekühlt wurde, den Formkörper umströmt. Mit anderen Worten, das gekühlte Produktgas strömt zunächst zumindest teilweise an dem Formkörper vorbei, und tritt erst anschließend über den Kaltgasauslass des Abkühlraums aus dem Reaktor aus. Zumindest ein Teil des abgekühlten Produktgases kann somit nach Passieren der Gasdurchführung nicht direkt zum Kaltgasauslass des Abkühlraums gelangen, sondern umströmt zunächst den im Abkühlraum angeordneten Formkörper.

Die Anordnung des Formkörpers im Abkühlraum des Reaktors bewirkt somit, dass das gekühlte Produktgas den Zwischenboden des Reaktors gleichmäßiger überströmt, bevor es den Abkühlraum über den seitlichen Kaltgasauslass verlässt. Die Teilversperrung der Querschnittsfläche des Abkühlraums durch den Formkörper bewirkt, dass die Strömung so umgelenkt wird, dass das Gas verstärkt entlang des Zwischenbodens strömt. Der Formkörper erfüllt somit quasi die Funktion eines Umlenkblechs, welches dafür sorgt, dass der Zwischenboden des Reaktors gleichmäßiger vom gekühlten Produktgas überströmt wird.

Eine bevorzugte Ausführungsform des erfindungsgemäßen Reaktors ist somit dadurch gekennzeichnet, dass der Formkörper derart angeordnet ist, dass nach der Durchführung des abzukühlenden Produktgases vom Reaktionsraum zum Abkühlraum und dem Umströmen des Formkörpers im Abkühlraum für zumindest einen Teil des abgekühlten Produktgases eine Strömung entlang des Zwischenbodens des Reaktors bewirkt wird, und das abgekühlte Produktgas anschließend über den Kaltgasauslass aus dem Reaktor austritt.

Die vorgenannten Maßnahmen führen, wie Untersuchungen gezeigt haben und weiter unten näher ausgeführt, zu einer verbesserten Kühlung und Vergleichmäßigung des Temperaturprofils entlang der Fläche des Zwischenbodens. Als Ergebnis sind die Wärmeübergangskoeffizienten entlang der Fläche des Zwischenbodens weniger unterschiedlich hoch und Temperaturspitzen werden verringert. Darüber hinaus wird die maximale am oder im Zwischenboden auftretende Temperatur verringert. Entsprechend treten weniger Wärmespannungen auf und die Kühlung des Zwischenbodens wird verbessert. Als Vorteile ergeben sich dadurch, dass die Auslegungstemperatur für bestimmte Reaktionsmedien berührende Bauteile, insbesondere im Hinblick auf den Zwischenboden, niedriger gewählt werden kann und/oder diese Bauteile insbesondere in Bezug auf die erforderliche Dicke des jeweiligen Bauteils kleiner dimensioniert werden können.

Durch die gezielte Strömungsführung mit Hilfe der Anordnung des Formkörpers kann der Wärmeübergang durch erzwungene Konvektion gegenüber einer ohne Formkörper quasi ruhenden Gasatmosphäre deutlich verbessert werden. Die Kühlwirkung wird über die Fläche des Zwischenbodens wie oben erläutert vergleichmäßigt, was eine Reduzierung von Spannungen innerhalb des Zwischenbodens bewirkt. Die gezielte Einbringung einer Teilversperrung mit Umlenkung im Sinne des im Abkühlraum angeordneten Formkörpers führt so auch zu einer erhöhten Sicherheitsreserve bezüglich der Temperatur des Zwischenbodens und bei entsprechender Umsetzung in Bezug auf die Ausmauerung und Wandstärke der Reaktionsmedien berührenden Bauteile zu Kosteneinsparungen beim Bau des Reaktors. Ferner können in Bezug auf die Reaktionsmedien berührenden Bauteile gegebenenfalls kostengünstigere Materialien, insbesondere günstigere warmfeste Legierungen, ausgewählt werden.

Gemäß einer Ausführungsform ist der Reaktionsraum des Reaktors in einem oberen Teil des Reaktors angeordnet und der Abkühlraum in einem unteren Teil des Reaktors angeordnet, wobei das Produktgas von oben nach unten strömt und dabei die Gasdurchführung beim Übergang vom Reaktionsraum in den Abkühlraum durchströmt. Die Gasdurchführung kann alternativ auch als Rohgasabgang bezeichnet werden. Gemäß einer Ausführungsform bildet die Gasdurchführung einen Teil des Abkühlraums. Das heiße Produktgas wird durch den intensiven Kontakt des heißen Gases mit dem Kühlmedium in der Gasdurchführung und/oder im Abkühlraum gekühlt. Gemäß einer Ausführungsform wird das heiße Produktgas innerhalb der Gasdurchführung zumindest teilweise abgekühlt und/oder vorgekühlt.

Bei dem Produktgas handelt es sich insbesondere um Synthesegas, welches zumindest die Bestandteile Wasserstoff, Kohlenmonoxid und Kohlendioxid aufweist.

Bei dem Brennstoff kann es sich um jeden für eine Vergasung geeigneten gasförmigen, flüssigen oder festen kohlenwasserstoffhaltigen Brennstoff handeln, welcher sich für eine partielle Oxidation zur Bildung des Produktgases, insbesondere zur Bildung von Synthesegas, eignet.

Der kohlenwasserstoffhaltige Brennstoff wird im Reaktor vorzugsweise gemäß dem Prinzip der Flugstromvergasung und bei Drücken von bis zu 100 bar und Temperaturen von über 1000 °C in einer Flammreaktion mit Hilfe eines Brenners zu vorzugsweise wasserstoff- und kohlenmonoxidreichem Synthesegas umgesetzt.

Bei dem für die Bildung des Produktgases erforderlichen Oxidationsmittel handelt es sich, ohne darauf beschränkt zu sein, um ein Gas- oder Gasgemisch, welches insbesondere exotherm mit dem Brennstoff reagiert, das heißt bei Reaktion mit dem Brennstoff eine negative Reaktionsenthalpie aufweist. Gleichzeitig wird eine partielle Oxidation des Brennstoffs bewirkt. Insbesondere findet im erfindungsgemäßen Reaktor somit keine oder nur in geringem Ausmaß eine vollständige Oxidation des kohlenwasserstoffhaltigen Brennstoffs zu Wasser und Kohlendioxid statt. Beispiele für typische Oxidationsmittel sind Luft, Sauerstoff und mit Sauerstoff angereicherte Luft.

Bei dem Kühlmedium kann es sich um jedes geeignete Medium handeln, welches das heiße Produktgas in direktem Kontakt abkühlen kann, ohne dabei mit dem Produktgas zu reagieren. Vorzugsweise handelt es sich bei dem Abkühlmedium um Wasser, welches im fachmännischen Jargon aufgrund der rasch erfolgenden Abkühlung auch als Quenchwasser bezeichnet wird.

Im Abkühlraum wird das heiße Produktgas durch direkten Wärmeaustausch mit dem Kühlmedium abgekühlt. In diesem Sinne findet eine direkte Kontaktierung des heißen Produktgases und des Kühlmediums statt, was von einer indirekten Kühlung, beispielsweise innerhalb eines Wärmeaustauschers über Rohrwandungen, zu unterscheiden ist.

Der erfindungsgemäße Reaktor verfügt über einen Kühlmedieneinlass für die Zufuhr von frischem Kühlmedium. Wurde das heiße Produktgas mit Hilfe dieses frischen Kühlmediums auf die erforderliche Temperatur abgekühlt, verlässt das abgekühlte Produktgas den Reaktor über den Kaltgasauslass. Optional wird auch ein Teil des durch die Abkühlung des Produktgases erwärmten Kühlmediums über den Kaltgasauslass aus dem Reaktor ausgeschleust. Überschüssiges Kühlmedium wird über den Kühlmedienauslass aus dem Abkühlraum abgezogen. Gemäß einer Ausführungsform ist der Kühlmedienauslass in einem Sumpfbereich, also in einem unteren Bereich oder Bodenbereich, des Reaktors angeordnet.

Eine Ausführungsform des erfindungsgemäßen Reaktors ist dadurch gekennzeichnet, dass der Formkörper die Form einer Scheibe aufweist oder im Wesentlichen die Form einer Scheibe aufweist.

Der Formkörper ist, sofern dieser scheibenförmig oder im Wesentlichen scheibenförmig ausgestaltet ist, nicht zwangsläufig, aber vorzugsweise als kreisförmige Scheibe ausgestaltet. "Scheibe" im Sinne der vorliegenden Offenbarung bedeutet vielmehr, dass der Formkörper auch eine Vieleckform oder jede andere von einer kreisförmigen Scheibe abweichende Form annehmen kann. In jedem Fall weist der Formkörper im Sinne einer scheibenförmigen oder im Wesentlichen scheibenförmigen Ausgestaltung in einer Ausdehnungsrichtung ein Vielfaches von einer senkrecht dazu stehenden Ausdehnungsrichtung auf. Insbesondere weist der scheibenförmige oder im Wesentlichen scheibenförmige Formkörper in Bezug auf die horizontale Ausdehnung ein Vielfaches von seiner vertikalen Ausdehnung auf.

Eine Ausführungsform des erfindungsgemäßen Reaktors ist dadurch gekennzeichnet, dass die Scheibe die Form eines Kreissegments oder im Wesentlichen die Form eines Kreissegments aufweist.

In diesem Fall weist der Formkörper die Form einer kreisförmigen Scheibe auf, aus welcher quasi teilkreisförmige Segmente entfernt wurden. Der Formkörper hat in diesem Falle die Form eines Kreissegments. Ein solcher Formkörper lässt sich besonders einfach in den Abkühlraum des Reaktors integrieren, welcher üblicherweise einen kreisförmigen Querschnitt oder im Wesentlichen kreisförmigen Querschnitt aufweist.

Eine Ausführungsform des Reaktors ist dadurch gekennzeichnet, dass der scheibenförmige Formkörper ein Loch oder eine Aussparung aufweist, und das Loch oder die Aussparung im Bereich der Gasdurchführung des Reaktors angeordnet ist, so dass das Loch die Gasdurchführung umschließt oder die Aussparung die Gasdurchführung teilweise umschließt.

"Umschließen" bedeutet nicht zwangsläufig, dass der Formkörper die Gasdurchführung im Bereich des Loches oder der Aussparung teilweise oder vollständig kontaktiert. Das Loch oder die Aussparung kann so angeordnet sein, dass zwischen dem Formkörper und der Gasdurchführung durch die Anordnung in diesem Bereich ein Spalt gebildet wird.

Gemäß dieser Ausführungsform ist der Formkörper insbesondere auf Höhe der Gasdurchführung des Reaktors angeordnet, und ein Loch des Formkörpers umschließt die Gasdurchführung vollständig oder eine Aussparung des Formkörpers umschließt die Gasdurchführung teilweise. Aufgrund dieser Anordnung umströmt immer zumindest ein Teil des abgekühlten Produktgases den Formkörper, nachdem es durch die Gasdurchtrittsöffnung hindurchgetreten ist, so dass dieser Teil des abgekühlten Produktgases nicht direkt zum Kaltgasauslass strömen kann.

Eine Ausführungsform des Reaktors ist dadurch gekennzeichnet, dass sich der teilweise über eine freie Querschnittsfläche des Abkühlraums erstreckende Formkörper auf einer dem Kaltgasauslass zugewandten Seite des Abkühlraums des Reaktors angeordnet ist. Insbesondere ist der Formkörper dadurch zumindest teilweise in einem Bereich zwischen der Gasdurchführung und dem seitlich angeordneten Kaltgasauslass angeordnet. Vorzugsweise ist der Formkörper dabei unterhalb des Kaltgasauslasses angeordnet. Insbesondere erstreckst sich der Formkörper in horizontaler Ausdehnung zumindest teilweise zwischen der Gasdurchführung und einer Innenseite der Wandung des Abkühlraums, wobei der Formkörper sich dabei vorzugsweise unterhalb des Kaltgasauslasses in horizontaler Ausdehnung erstreckt.

Dadurch wird erreicht, dass zumindest ein Teil des abzukühlenden Produktgas nicht unmittelbar vom Ausgang der Gasdurchführung zum Kaltgasauslass strömen kann. Vielmehr ist dieser Weg durch den Formkörper zumindest teilweise versperrt. Das abzukühlende Produktgas nimmt so quasi einen "Umweg" und überströmt dadurch den Zwischenboden des Reaktors gleichmäßiger.

Diese Ausführungsform ist insbesondere bevorzugt, wenn der scheibenförmige Formkörper ein Loch oder eine Aussparung aufweist, und das Loch oder die Aussparung im Bereich der Gasdurchführung des Reaktors angeordnet ist, so dass das Loch die Gasdurchführung vollständig umschließt oder die Aussparung die Gasdurchführung teilweise umschließt.

Eine Ausführungsform des Reaktors ist dadurch gekennzeichnet, dass der Kaltgasauslass oberhalb des Formkörpers angeordnet ist. Diese Ausführungsform ist insbesondere bevorzugt, wenn der sich zumindest teilweise über eine freie Querschnittsfläche des Abkühlraums erstreckende Formkörper auf einer dem Kaltgasauslass zugewandten Seite des Abkühlraums des Reaktors angeordnet ist und/oder der scheibenförmige Formkörper ein Loch oder eine Aussparung aufweist, und das Loch oder die Aussparung im Bereich der Gasdurchführung des Reaktors angeordnet ist, so dass das Loch die Gasdurchführung vollständig umschließt oder die Aussparung die Gasdurchführung zumindest teilweise umschließt. Ferner bevorzugt ist der Kaltgasauslass unterhalb des Zwischenbodens angeordnet.

Dadurch wird in verbesserter Form erreicht, dass zumindest ein Teil des abzukühlenden Produktgas nicht unmittelbar vom Ausgang der Gasdurchführung zum Kaltgasauslass strömen kann und dadurch den Zwischenboden des Reaktors gleichmäßiger überströmt. Insbesondere durch eine dieser Anordnungen ist der direkte Weg vom Auslass der Gasdurchführung zum Kaltgasauslass quasi versperrt und der Zwischenboden wird gleichmäßig vom abgekühlten Produktgas überströmt.

Eine Ausführungsform des Reaktors ist dadurch gekennzeichnet, dass der Formkörper in Bezug auf die Ebene seiner Hauptausdehnung horizontal oder im Wesentlichen horizontal innerhalb des Abkühlraums angeordnet ist, vorzugsweise in Bezug auf die Ebene seiner Hauptausdehnung mit einem Winkel von 0° bis 30° zu einer Horizontalen innerhalb des Abkühlraums angeordnet ist.

Eine Ausführungsform des Reaktors ist dadurch gekennzeichnet, dass sich der Formkörper so über die Querschnittsfläche des Abkühlraums erstreckt, dass in Bezug auf eine Projektion einer innerhalb des Abkühlraums und unterhalb der Gasdurchführung angeordneten Ebene eine Teilversperrung von 20 % bis 90 % der freien Querschnittsfläche dieser Ebene bewirkt wird.

Eine Ausführungsform des Reaktors ist dadurch gekennzeichnet, dass der Formkörper eine oder eine Vielzahl von Durchtrittsöffnungen aufweist.

Der Formkörper kann eine, vorzugsweise jedoch eine Vielzahl von Durchtrittsöffnungen aufweisen. Vorzugsweise handelt es sich bei den Durchtrittsöffnungen um Löcher, wobei die Querschnittsfläche eines entsprechenden Lochs insbesondere verhältnismäßig klein ist im Verhältnis zur Gesamtquerschnittsfläche des Formkörpers. Über die Durchtrittsöffnungen kann für die Abkühlung des Produktgases genutztes und kondensiertes Kühlmedium effektiv ablaufen und wird anschließend über den Kühlmedienauslass aus dem Reaktor abgezogen. Gleichzeitig sorgen die Durchtrittsöffnungen dafür, dass ein Teil des abzukühlenden Produktgases trotz im Abkühlraum angeordneten Formkörpers durch diesen hindurchströmen und direkt zum Kaltgasauslass gelangen kann. Dadurch kann die Vergleichmäßigung der Strömung entlang des Zwischenbodens durch eine vermehrte Bildung von Verwirbelungen und Turbulenzen weiter verbessert werden.

Unter einer "Vielzahl" von Durchtrittsöffnungen ist dabei eine Zahl von wenigstens zwei Durchtrittsöffnungen zu verstehen, insbesondere jedoch eine Zahl von wenigstens 10 Durchtrittsöffnungen, oder wenigstens 100 Durchtrittsöffnungen, oder wenigstens 200 Durchtrittsöffnungen, oder wenigstens 500 Durchtrittsöffnungen, oder wenigstens 1000 Durchtrittsöffnungen.

Eine Ausführungsform des Reaktors ist dadurch gekennzeichnet, dass die Durchtrittsöffnungen des Formkörpers eine offene Porosität des Formkörpers definieren, und die offene Porosität 5 % bis 95 % beträgt, vorzugsweise 30 % bis 90 % beträgt, weiter bevorzugt 40 % bis 90 % beträgt, weiter bevorzugt 45 % bis 85 % beträgt, und weiter bevorzugt 50 % bis 80 % beträgt.

Die offene Porosität des Formkörpers ist derjenige Anteil Volumen des Formkörpers, welcher von dem abgekühlten Produktgas frei durchströmt werden kann. Handelt es sich bei dem Formkörper beispielsweise um ein kreisförmiges oder kreissegmentförmiges Lochblech, wobei die Löcher kreisförmige Gasdurchführungen definieren, so ist die offene Porosität durch das Gesamtvolumen der Löcher im Verhältnis zum Gesamtvolumen des Lochblechs mit Löchern definiert.

Eine Ausführungsform des Reaktors ist dadurch gekennzeichnet, dass die Durchtrittsöffnungen des Formkörpers eine offene Porosität des Formkörpers definieren, und die offene Porosität 30 % bis 70 % beträgt, vorzugsweise 40 % bis 60 % beträgt, und weiter bevorzugt 50 % beträgt.

CFD Simulationen haben gezeigt, dass bei einer offenen Porosität des Formkörpers von um die 50 % eine besonders effektive Kühlung am Zwischenboden auf der dem seitlichen Kaltgasauslass gegenüberliegenden Seite erzielt wird.

Eine Ausführungsform des Reaktors ist dadurch gekennzeichnet, dass die Durchtrittsöffnungen des Formkörpers eine offene Porosität des Formkörpers definieren, und die offene Porosität 70 % bis 90 % beträgt, vorzugsweise 75 % bis 85 % beträgt, und weiter bevorzugt 80 % beträgt.

CFD Simulationen haben ergeben, dass bei einer offenen Porosität des Formkörpers von um die 80 % eine verbesserte Kühlung des Zwischenbodens auf beiden Seiten, also auf der Seite des Kaltgasauslasses und der davon abgewandten Seite, erzielt wird.

Eine Ausführungsform des Reaktors ist dadurch gekennzeichnet, dass die Form der Durchtrittsöffnungen des Formkörpers ausgewählt ist aus zumindest einem Element der Gruppe aufweisend kreisförmig, quaderförmig, rechteckförmig, stäbchenförmig oder rautenförmig.

Eine Ausführungsform des Reaktors ist dadurch gekennzeichnet, dass die Gasdurchführung ein erstes und ein zweites Ende aufweist, wobei das erste Ende an den Reaktionsraum angrenzt und das zweite Ende an den Abkühlraum angrenzt, und wobei der Formkörper an das zweite Ende der Gasdurchführung angrenzend angeordnet oder mit dem zweiten Ende der Gasdurchführung verbunden ist.

Ist der Formkörper an das zweite Ende der Gasdurchführung angrenzend angeordnet oder damit verbunden, wird der Formkörper zwangsläufig und in vorteilhafter Weise vollständig oder nahezu vollständig von zumindest einem Teil des abgekühlten Produktgases umströmt. Dies ist insbesondere in vorteilhafter Weise dann der Fall, wenn der Kaltgasauslass oberhalb des Formkörpers angeordnet ist. Der Formkörper grenzt gemäß dieser Ausführungsform direkt kontaktierend oder einen Spalt bildend an das zweite Ende der Gasdurchführung an oder ist formschlüssig, kraftschlüssig oder stoffschlüssig mit dem zweiten Ende der Gasdurchführung verbunden.

Gemäß einer Ausführungsform ist der Formkörper mit einer Innenseite der Wandung des Abkühlraums des Reaktors verbunden oder grenzt an diese Wandung an. Dies ist insbesondere bevorzugt, wenn der Formkörper ferner an das zweite Ende der Gasdurchführung angrenzend angeordnet oder damit verbunden ist.

Eine Ausführungsform des Reaktors ist dadurch gekennzeichnet, dass auf einer Innenseite oder an einem Ende der Gasdurchführung eine oder eine Mehrzahl von Vorrichtungen, insbesondere Düsen, zur Beaufschlagung des abzukühlenden Produktgases mit Kühlmedium angeordnet sind.

In vorteilhafter Weise kann das Produktgas gemäß dieser Ausführungsform so bereits beim Durchströmen der Gasdurchführung gekühlt werden und umströmt anschließend den Formkörper. Der Kühlmedieneinlass steht mit den Vorrichtungen, insbesondere Düsen, in Fluidverbindung.

Eine Ausführungsform des Reaktors ist dadurch gekennzeichnet, dass der Zwischenboden des Reaktors und/oder der Formkörper mit einem Strömungsleitblech oder einer Vielzahl von Strömungsleitblechen versehen ist.

Durch das Anbringen von Strömungsleitblechen am Zwischenboden des Reaktors und/oder am Formkörper kann die Vergleichmäßigung der Strömung entlang des Zwischenbodens weiter verbessert werden.

Die Aufgaben der Erfindung werden ferner zumindest teilweise gelöst durch die Verwendung des erfindungsgemäßen Reaktors nach einer der vorgenannten Ausführungsformen für die Herstellung von Synthesegas aus kohlenstoffhaltigen Einsatzstoff, wie beispielsweise Erdgas, Fraktionen der Erdölverarbeitung, Nebenprodukten aus Synthesen, Biomassen, kommunalem Abfall, Kohle und/oder Koks.

Die Aufgaben der Erfindung werden ferner zumindest teilweise gelöst durch ein Verfahren zur Erzeugung eines Produktgases, insbesondere eines Synthesegases, durch Vergasung eines kohlenwasserstoffhaltigen Brennstoffs in einem Reaktor, aufweisend die folgenden Verfahrensschritte:
a) Erzeugung eines heißen Produktgases durch partielle Oxidation des kohlenwasserstoffhaltigen Brennstoffs mit einem Oxidationsmittel in einem Reaktionsraum des Reaktors;
b) Führen des heißen Produktgases in einen Abkühlraum des Reaktors zum Abkühlen des heißen Produktgases durch direkten Wärmeaustausch mit einem Kühlmedium;
c) Umströmen eines im Abkühlraum angeordneten Formkörpers mit zumindest einem Teil des abgekühlten Produktgases;
d) Abziehen des abgekühlten Produktgases aus dem Abkühlraum, nachdem das abgekühlte Produktgas gemäß c) den Formkörper zumindest zum Teil umströmt hat.

Eine Ausführungsform des erfindungsgemäßen Verfahrens ist dadurch gekennzeichnet, dass das abgekühlte Produktgas entlang eines Zwischenbodens des Reaktors geführt wird, bevor es aus dem Abkühlraum abgezogen wird, wobei der Zwischenboden den Reaktionsraum und den Abkühlraum des Reaktors räumlich voneinander trennt.

### Ausführungsbeispiel

Die Erfindung wird im Folgenden durch Zeichnungen und Ausführungsbeispiele genauer dargestellt, wobei die Zeichnungen und Ausführungsbeispiele keine Beschränkung der Erfindung bedeuten. Die Zeichnungen sind, sofern nicht anders angegeben, nicht maßstabsgetreu.

Es zeigt
- Figur 1: eine schematische Darstellung eines Reaktors gemäß einem Beispiel der Erfindung,
- Figur 2: zwei Ausführungsformen für einen erfindungsgemäßen Formkörper jeweils mit und ohne Durchtrittsöffnungen,
- Figur 3: eine bildliche Darstellung der Verteilung der Wärmeübergangskoeffizienten über den Zwischenboden des Reaktors gemäß einem Vergleichsbeispiel und zwei erfindungsgemäßen Beispielen, und

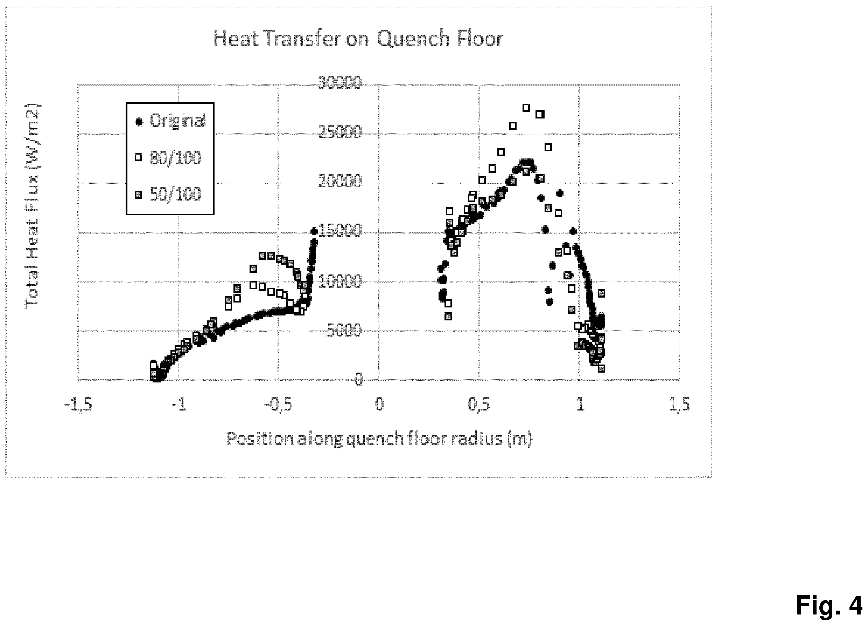

- Figur 4: eine graphische Darstellung der Verteilung der Wärmeübergangskoeffizienten über den Zwischenboden des Reaktors gemäß einem Vergleichsbeispiel und zwei erfindungsgemäßen Beispielen.

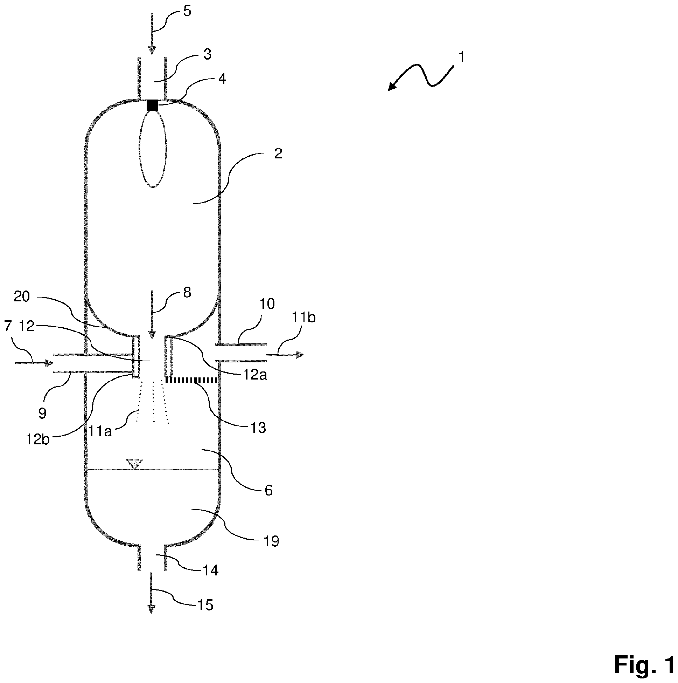

Figur 1 zeigt eine stark vereinfachte, schematische Darstellung eines Beispiels eines Reaktors 1 gemäß der Erfindung. Reaktor 1 verfügt über einen oberen Reaktionsraum 2 und einen unteren Abkühlraum 6. Der Reaktionsraum 2 und der Abkühlraum 6 sind durch einen tragenden Zwischenboden 20 räumlich voneinander getrennt. Eine im Zwischenboden 20 angeordnete Gasdurchführung 12, welche sich durch den Zwischenboden 20 hindurch erstreckt, stellt eine Fluidverbindung zwischen dem Reaktionsraum 2 und dem Abkühlraum 6 her. Die Gasdurchführung 12 verfügt über ein erstes Ende 12a, welches an den Reaktionsraum 2 angrenzt und ein zweites Ende 12b, welches an den Abkühlraum 6 angrenzt.

Der Reaktionsraum 2 verfügt über einen Brenner 4 und einen Einlass 3 für kohlenwasserstoffhalten Brennstoff und Oxidationsmittel. Ein Gemisch 5 aus kohlenwasserstoffhaltigem Brennstoff und Oxidationsmittel wird von einer oberen Seite des Reaktors aus über den Einlass 3 in den Reaktionsraum 2 eingebracht und mit Hilfe des Brenners 4 unter Ausbildung einer Flamme partiell zu einem heißen Produktgas 8 umgesetzt, welches den Reaktionsraum 2 anschließend durch Durchströmen der Gasdurchführung 12 verlässt und in den Abkühlraum 6 eintritt.

Bei dem Brennstoff handelt es sich beispielsweise um flüssige Fraktionen der Erdölverarbeitung, insbesondere hochsiedende Rückstände der Erdölverarbeitung. Bei dem Oxidationsmittel handelt es sich beispielsweise um Luft. Aufgrund der hohen im Reaktionsraum 2 herrschenden Temperaturen von regelmäßig über 1000 °C ist dieser innen mit einer feuerfesten Ausmauerung (nicht gezeigt) versehen. Der Reaktormantel des Reaktionsraums 2 besteht aus einer warmfesten Legierung. Bei dem gebildeten heißen Produktgas 8 handelt es sich um kohlenmonoxidreiches und wasserstoffreiches Synthesegas.

Der den unteren Teil des Reaktors 1 bildende Abkühlraum 6 verfügt über einen Kühlmedieneinlass 9, über welchen dem Abkühlraum 6 frisches Kühlmedium 7 zugeführt wird. Das dem Abkühlraum 6 zugeführte Kühlmedium 7 wird über innerhalb der Gasdurchführung 12 angeordnete Düsen (nicht gezeigt) als feiner Nebel verteilt und kühlt auf diese Weise das die Gasdurchführung durchströmende abzukühlende heiße Produktgas 8 durch direkte Wärmeübertragung vom heißen Produktgas auf das Kühlmedium 7. Ein Teil des verdampften Kühlmediums verlässt den Reaktor 1 zusammen mit dem abgekühlten Produktgas über einen seitlich am Abkühlraum 6 des Reaktors 1 angeordneten Kaltgasauslass 10. Überschüssiges Kühlmedium sammelt sich im Sumpf mit Kühlmediumvorlage 19 des Abkühlraums 6 und wird kontinuierlich über den Kühlmedienauslass 14 als überschüssiges Kühlmedium 15 aus dem Abkühlraum 6 des Reaktors 1 abgezogen.

Im Abkühlraum 6 ist ein Formkörper 13 angeordnet, welcher sich teilweise über die freie Querschnittsfläche des Abkühlraums 6 erstreckt. Der Formkörper 13 weist die Form eines Kreissegments auf, und hat auf seiner Innenseite eine Aussparung, welche an das zweite Ende 12b der Gasdurchführung 12 angrenzt und dadurch mit der Gasdurchführung 12 in Kontakt steht. Die Aussparung kann die Gasdurchführung 12 je nach Ausgestaltung und Anordnung ganz oder teilweise umschließen. Der Formkörper 13 ist im Wesentlichen zwischen der Gasdurchführung 12 und einer Innenseite der Wandung des Abkühlraums 6 des Reaktors auf einer dem Kaltgasauslass 10 zugewandten Seite angeordnet. Der Formkörper 13 kann dabei je nach Art der Befestigung formschlüssig, kraftschlüssig oder stoffschlüssig mit dem zweiten Ende 12b der Gasdurchführung 12 verbunden werden und/oder an der Wandung des Abkühlraums 6 befestigt werden.

Der Kaltgasauslass 10 befindet sich oberhalb des Formkörpers 13 und unterhalb des Zwischenbodens 20. Durch diese Anordnung wird sichergestellt, dass das abgekühlte Produktgas 11a nach Passieren der Gasdurchführung 12 nicht hauptsächlich direkt zum Kaltgasauslass 10 strömt, wodurch der Bereich unterhalb des Zwischenbodens 20 nur in geringem Maße überströmt würde. Durch die Anordnung des Formkörpers 13 mit Teilversperrung der freien Querschnittsfläche des Abkühlraums 6 wird vielmehr bewirkt, dass das abgekühlte Produktgas zumindest teilweise in der Figur 1 über die linke Seite zum Kaltgasauslass 10 strömt, wodurch der Zwischenboden 20 insbesondere im dem Kaltgasauslass 10 abgewandten Bereich gleichmäßiger und besser gekühlt wird.

Ist gemäß aus dem Stand der Technik bekannten Reaktoren kein erfindungsgemäßer Formkörper 13 innerhalb des Abkühlraums angeordnet, so führt dies dazu, dass das abgekühlte Produktgas 11a den Bereich unterhalb des Zwischenbodens 20 kaum durchströmt, da es zum größten Teil vom zweiten Ende 12b der Gasdurchführung 12 auf direktem Weg mit signifikantem Abstand zum Zwischenboden 20 zum Kaltgasauslass 10 strömt. Im Bereich unterhalb des Zwischenbodens 20 ruhendes Gas hat nur einen geringen Kühleffekt auf den Zwischenboden 20. Dies führt dazu, dass der Zwischenboden 20 nur lokal, und ausschließlich im an den Kaltgasauslass 10 angrenzenden Bereich mehr oder weniger effektiv gekühlt wird.

Mit Hilfe des erfindungsgemäßen Formkörpers 13 wird der gesamte Teil oder zumindest ein Großteil der Strömung des abgekühlten Produktgases 11a derart umgeleitet, dass das abgekühlte Produktgas 11a verstärkt unterhalb des Zwischenbodens 20 entlangströmt. Dadurch wird der Kühleffekt auf den Zwischenboden 20 verstärkt und vergleichmäßigt. Dadurch kann das Risiko einer Überhitzung des Zwischenbodens 20 und das Risiko eines Materialversagens aufgrund zu großer Wärmespannungen auch im Falle eines Versagens der hochtemperaturfesten Auskleidung des Zwischenbodens (nicht gezeigt) deutlich reduziert oder ganz vermieden werden.

Der Formkörper 13 gemäß Figur 1 weist darüber hinaus eine Vielzahl von Durchtrittsöffnungen für Produktgas und Quenchwasser auf. Die Durchtrittsöffnungen bewirken einerseits das verbesserte Abfließen von überschüssigem Kühlmedium in Richtung Reaktorsumpf, jedoch kann dadurch auch eine Verbesserung der Strömungsverhältnisse im Abkühlraum 6 erreicht werden.

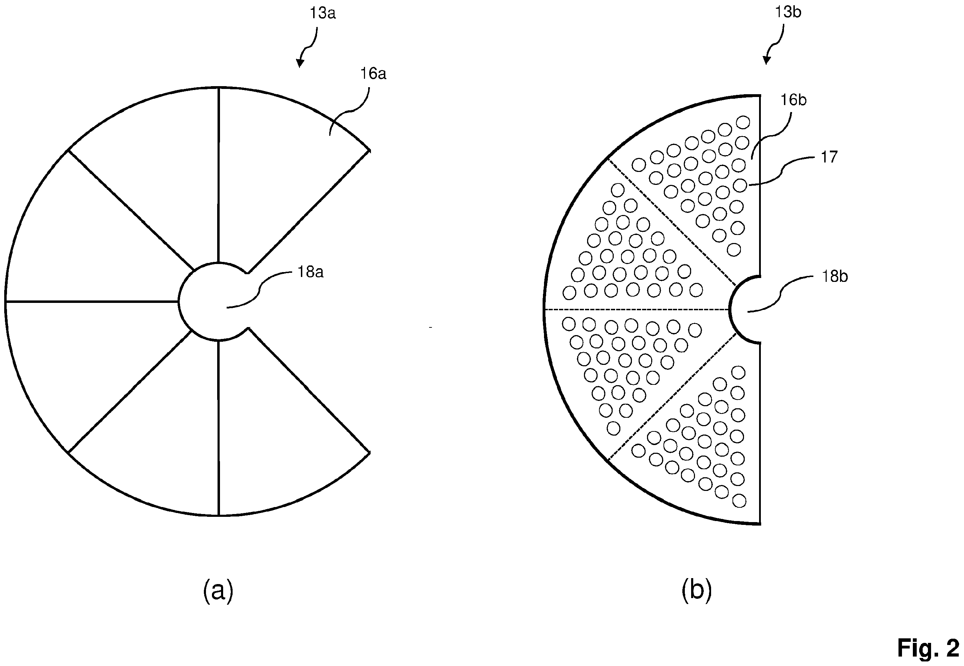

Zwei Beispiele für den Formkörper 13 sind in einer Draufsicht in vereinfachter, schematischer Weise in Figur 2 dargestellt, wobei Formkörper 13a einen Formkörper 13 ohne Durchtrittsöffnungen und Formkörper 13b einen Formkörper 13 mit Durchtrittsöffnungen zeigt.

Der Formkörper 13a weist die Grundform einer Scheibe und insbesondere die Form eines Kreissgements auf. Der Formkörper 13a ist dabei aus insgesamt sechs Formkörpersegmenten 16a, z.B. hitzebeständigen Blechen, zusammengesetzt. Der kreissegmentförmige Formkörper 13a weist darüber hinaus eine Aussparung 18a auf, welche die Gasdurchführung 12 gemäß Figur 1 teilweise umschließen würde. Der Formkörper 13a wie in Figur 1 dargestellt würde bei horizontaler Anordnung innerhalb des Abkühlraums 6 in etwa 75 % der freien Querschittsfläche des Abkühlraums versperren.

Der Formkörper 13b weist die Grundform einer Scheibe und insbesondere die Form eines Kreissgements auf. Der Formkörper 13b ist dabei aus insgesamt vier Formkörpersegmenten 16b, z.B. hitzebeständigen Blechen, zusammengesetzt. Jedes Segment weist achtundzwanzig kreisförmige Durchtrittsöffnungen 17 (Löcher) auf, wobei die Zahl der Durchtrittsöffnungen oder Löcher in der Praxis weitaus höher liegen kann. Der kreissegmentförmige Formkörper 13b weist darüber hinaus eine Aussparung 18b auf, welche die Gasdurchführung 12 gemäß Figur 1 teilweise umschließen würde. Der Formkörper 13b wie in Figur 1 dargestellt würde bei horizontaler Anordnung innerhalb des Abkühlraums 6 in etwa 50 % minus die Fläche der Durchtrittsöffnungen der freien Querschittsfläche des Abkühlraums versperren.

Die Ausgestaltung des Formkörpers 13 ist bei weitem nicht auf die Beispiele gemäß Figur 2 beschränkt, sondern in Bezug auf dessen Geometrie im Prinzip frei wählbar und wird nur durch die Einbringung in den Behälter des Abkühlraums 6 limitiert. Zur Befestigung und Positionierung des Formkörpers können beispielsweise Halterungen im Abkühlraum 6 in Form von Pratzen, Winkeln oder Stäben zum Aufhängen verwendet werden. Die geometrische Form der Gasdurchtrittsöffnungen 17 des Formkörpers 13 ist ebenfalls prinzipiell frei wählbar und wird dementsprechend von einem Fachmann für jeden Einzelfall den Strömungsbedingungen im Reaktor sowie der Verfügbarkeit und Zugänglichkeit angepasst.

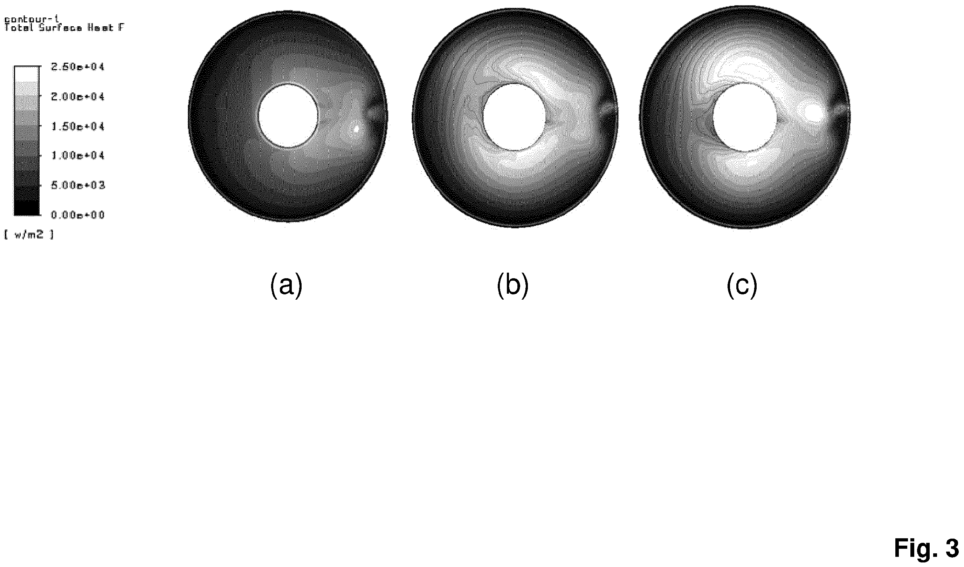

Figur 3 zeigt die Ergebnisse einer CFD Simulation für ein Vergleichsbeispiel (a) ohne Formkörper sowie zwei erfindungsgemäße Beispiele (b) und (c) mit Formkörper 13 in bildlicher Darstellung. Im erfindungsgemäßen Beispiel (b) wurde die CFD Simulation für einen als poröse Platte mit halbkreisförmiger Geometrie ausgestalteten Formkörper durchgeführt. Der Formkörper weist dabei eine offene Porosität von 50 % auf, und versperrt in etwa 50 % der freien Querschnittsfläche des Abkühlraums 6 des Reaktors 1. Der Formkörper 13 erstreckt sich dabei in horizontaler Ausdehnung auf Höhe der Gasdurchführung 12, und ist zwischen der Gasdurchführung 12 und einer Innenfläche der Wandung des Abkühlraums 6 sowie unterhalb des Kaltgasauslasses 10 angeordnet. Für Beispiel (c) gelten die gleichen Randbedingungen wie für Beispiel (b), jedoch weist der Formkörper eine offene Porosität von 80 % auf.

Gezeigt ist die Verteilung des Wärmeübergangs über den Zwischenboden 20 mit Hilfe des Wärmeübergangskoeffizienten in Watt pro Quadratmeter (W/m²). Angestrebt wird stets ein möglichst hoher und gleichmäßiger Wärmeübergang, um eine optimale Kühlung des und ein Minimum an Wärmspannungen im Zwischenboden 20 zu erzielen. Die linke Seite jeder Teilabbildung zeigt die vom Kaltgasauslass 10 abgewandte Seite und die rechte Seite die dem Kaltgasauslass 10 zugewandte oder an diesen angrenzende Seite. Je dunkler die Farbe der Schattierung, desto schlechter der Wärmeübergang, je heller desto besser.

Das Vergleichsbeispiel (a) zeigt insbesondere auf der linken, vom Kaltgasauslass abgewandten Seite einen großflächigen Bereich mit sehr niedrigem Wärmeübergangskoeffizienten (schwarz dargestellt). Ferner weist nur ein sehr kleiner, fast punktueller Bereich in unmittelbarer Nähe des Kaltgasauslasses 10 einen sehr guten Wärmeübergangskoeffizienten auf (weißer Bereich). Der Zwischenboden wird gemäß Vergleichsbeispiel (a) somit schlecht sowie ungleichmäßig gekühlt. Die Beispiele (b) und (c) zeigen eine signifikante Verbesserung in Form von wesentlich größeren Bereichen (weiß) mit hohem Wärmeübergangskoeffizienten, und wesentlich kleineren Bereichen (schwarz) mit niedrigen Wärmeübergangskoeffizienten. Durch den Einbau des Formkörpers 13 wird somit offensichtlich die Strömung des abgekühlten Produktgases 11a verstärkt in Richtung der Oberfläche des Zwischenbodens 20 umgelenkt. Insbesondere wird auch im Bereich der vom Kaltgasauslass 10 abgewandten Seite eine Überströmung des Zwischenbodens 20 erzielt.

Die graphische Darstellung der gleichen Simulation gemäß Figur 3 verdeutlicht ferner, dass insbesondere für Beispiel (b) (Porosität 50 %) auf der dem Kaltgasauslass 10 abgewandten Seite über den Großteil der Fläche ein besserer Wärmeübergang im Vergleich zum Vergleichsbeispiel (a) erzielt wird. Gemäß Beispiel (c) (Porosität 80 %) wird auf beiden Seiten eine verbesserte Kühlung im Vergleich zum Vergleichsbeispiel (a) erzielt.

### Liste der Bezugszeichen

- 1: Reaktor
- 2: Reaktionsraum
- 3: Einlass für Brennstoff und Oxidationsmittel
- 4: Brenner mit Flamme
- 5: Gemisch aus Brennstoff und Oxidationsmittel
- 6: Abkühlraum
- 7: frisches Kühlmedium
- 8: heißes Produktgas
- 9: Kühlmedieneinlass
- 10: Kaltgasauslass
- 11a, 11b: abgekühltes Produktgas
- 12: Gasdurchführung
- 12a: erstes Ende der Gasdurchführung
- 12b: zweites Ende der Gasdurchführung
- 13: Formkörper
- 13a: Formkörper ohne Durchtrittsöffnungen
- 13b: Formkörper mit Durchtrittsöffnungen
- 14: Kühlmedienauslass
- 15: Überschüssiges Kühlmedium
- 16a, 16b: Formkörpersegment
- 17: Durchtrittsöffnung
- 18a, 18b: Aussparung
- 19: Sumpf mit Kühlmedium Vorlage
- 20: Zwischenboden

## Patentansprüche

1. Reaktor zur Erzeugung eines Produktgases, insbesondere eines Synthesegases, durch Vergasung eines kohlenwasserstoffhaltigen Brennstoffs, aufweisend
- einen Reaktionsraum, aufweisend eine Vorrichtung zum Einlass von Reaktionsmedien, insbesondere eines Brennstoffs und eines Oxidationsmittels für die partielle Oxidation des Brennstoffs mit dem Oxidationssmittel zu einem heißen Produktgas;
- einen Abkühlraum für die Abkühlung des heißen Produktgases durch direkten Wärmeaustausch mit einem Kühlmedium;
- ein Kühlmedieneinlass für die Zufuhr von frischem Kühlmedium zum Abkühlraum;
- einen seitlich am Abkühlraum angeordneten Kaltgasauslass zum Abziehen des im Abkühlraum abgekühlten Produktgases und optional eines Teils des durch die Abkühlung des Produktgases erwärmten Kühlmediums aus dem Abkühlraum;
- einen Zwischenboden, welcher den Reaktionsraum und den Abkühlraum räumlich voneinander trennt;
- eine im Zwischenboden angeordnete und sich durch den Zwischenboden hindurch erstreckende Gasdurchführung für die Durchführung des abzukühlenden Produktgases vom Reaktionsraum zum Abkühlraum;
- ein Kühlmedienauslass zum Abziehen von überschüssigem Kühlmedium aus dem Abkühlraum; und
- einen im Abkühlraum angeordneten Formkörper, welcher sich teilweise über eine freie Querschnittsfläche des Abkühlraums erstreckt und eine Teilversperrung der Querschnittsfläche des Abkühlraums bewirkt, wobei der Formkörper derart angeordnet ist, dass zumindest ein Teil des abgekühlten Produktgases nach Umströmen des Formkörpers anschließend über den Kaltgasauslass des Abkühlraums aus dem Reaktor austritt.

2. Reaktor nach Anspruch 1, **dadurch gekennzeichnet, dass** der Formkörper derart angeordnet ist, dass nach der Durchführung des abzukühlenden Produktgases vom Reaktionsraum zum Abkühlraum und dem Umströmen des Formkörpers im Abkühlraum für zumindest einen Teil des abgekühlten Produktgases eine Strömung entlang des Zwischenbodens des Reaktors bewirkt wird, und das abgekühlte Produktgas anschließend über den Kaltgasauslass aus dem Reaktor austritt.

3. Reaktor nach Anspruch 1 oder 2, **dadurch gekennzeichnet, dass** der Formkörper die Form einer Scheibe aufweist.

4. Reaktor nach Anspruch 3, **dadurch gekennzeichnet, dass** die Scheibe die Form eines Kreissegments aufweist.

5. Reaktor nach einem der Ansprüche 3 oder 4, **dadurch gekennzeichnet, dass** der scheibenförmige Formkörper ein Loch oder eine Aussparung aufweist, und das Loch oder die Aussparung im Bereich der Gasdurchführung des Reaktors angeordnet ist, so dass das Loch die Gasdurchführung umschließt oder die Aussparung die Gasdurchführung teilweise umschließt.

6. Reaktor nach einem der vorhergehenden Ansprüche, **dadurch gekennzeichnet, dass** sich der zumindest teilweise über eine freie Querschnittsfläche des Abkühlraums erstreckende Formkörper auf einer dem Kaltgasauslass zugewandten Seite des Abkühlraums des Reaktors angeordnet ist.

7. Reaktor nach einem der vorhergehenden Ansprüche, **dadurch gekennzeichnet, dass** der Formkörper in Bezug auf die Ebene seiner Hauptausdehnung horizontal oder im Wesentlichen horizontal innerhalb des Abkühlraums angeordnet ist, vorzugsweise in Bezug auf die Ebene seiner Hauptausdehnung mit einem Winkel von 0° bis 30° zu einer Horizontalen innerhalb des Abkühlraums angeordnet ist.

8. Reaktor nach einem der vorhergehenden Ansprüche, **dadurch gekennzeichnet, dass** sich der Formkörper so über die Querschnittsfläche des Abkühlraums erstreckt, dass in Bezug auf eine Projektion einer innerhalb des Abkühlraums und unterhalb der Gasdurchführung angeordneten Ebene eine Teilversperrung von 20 % bis 90 % der freien Querschnittsfläche dieser Ebene bewirkt wird.

9. Reaktor nach einem der vorhergehenden Ansprüche, **dadurch gekennzeichnet, dass** der Formkörper eine oder eine Vielzahl von Durchtrittsöffnungen aufweist.

10. Reaktor nach Anspruch 10, **dadurch gekennzeichnet, dass** die Durchtrittsöffnungen des Formkörpers eine offene Porosität des Formkörpers definieren, und die offene Porosität 5 % bis 95 % beträgt, vorzugsweise 30 % bis 90 % beträgt, weiter bevorzugt 40 % bis 90 % beträgt, weiter bevorzugt 45 % bis 85 % beträgt, und weiter bevorzugt 50 % bis 80 % beträgt.

11. Reaktor nach Anspruch 10, **dadurch gekennzeichnet, dass** die Durchtrittsöffnungen des Formkörpers eine offene Porosität des Formkörpers definieren, und die offene Porosität 30 % bis 70 % beträgt, vorzugsweise 40 % bis 60 % beträgt, und weiter bevorzugt 50 % beträgt.

12. Reaktor nach Anspruch 10, **dadurch gekennzeichnet, dass** die Durchtrittsöffnungen des Formkörpers eine offene Porosität des Formkörpers definieren, und die offene Porosität 70 % bis 90 % beträgt, vorzugsweise 75 % bis 85 % beträgt, und weiter bevorzugt 80 % beträgt.

13. Reaktor nach einem der Ansprüche 9 bis 12, **dadurch gekennzeichnet, dass** die Form der Durchtrittsöffnungen des Formkörpers ausgewählt ist aus zumindest einem Element der Gruppe aufweisend kreisförmig, quaderförmig, rechteckförmig, stäbchenförmig oder rautenförmig.

14. Reaktor nach einem der vorhergehenden Ansprüche, **dadurch gekennzeichnet, dass** der Kaltgasauslass oberhalb des Formkörpers angeordnet ist.

15. Reaktor nach einem der vorhergehenden Ansprüche, **dadurch gekennzeichnet, dass** die Gasdurchführung ein erstes und ein zweites Ende aufweist, wobei das erste Ende an den Reaktionsraum angrenzt und das zweite Ende an den Abkühlraum angrenzt, und wobei der Formkörper an das zweite Ende der Gasdurchführung angrenzend angeordnet oder mit dem zweiten Ende der Gasdurchführung verbunden ist.

16. Reaktor nach einem der vorhergehenden Ansprüche, **dadurch gekennzeichnet, dass** auf einer Innenseite oder an einem Ende der Gasdurchführung eine oder eine Mehrzahl von Vorrichtungen, insbesondere Düsen, zur Beaufschlagung des abzukühlenden Produktgases mit Kühlmedium angeordnet sind.

17. Reaktor nach einem der vorhergehenden Ansprüche, **dadurch gekennzeichnet, dass** der Zwischenboden des Reaktors und/oder der Formkörper mit einem Strömungsleitblech oder einer Vielzahl von Strömungsleitblechen versehen ist.

18. Verwendung des Reaktors nach einem der vorherigen Ansprüche für die Herstellung von Synthesegas aus kohlenstoffhaltigen Einsatzstoff, wie beispielsweise Erdgas, Fraktionen der Erdölverarbeitung, Nebenprodukten aus Synthesen, Biomassen, kommunalem Abfall, Kohle und/oder Koks.

19. Verfahren zur Erzeugung eines Produktgases, insbesondere eines Synthesegases, durch Vergasung eines kohlenwasserstoffhaltigen Brennstoffs in einem Reaktor, aufweisend die folgenden Verfahrensschritte:
a) Erzeugung eines heißen Produktgases durch partielle Oxidation des kohlenwasserstoffhaltigen Brennstoffs mit einem Oxidationsmittel in einem Reaktionsraum des Reaktors;
b) Führen des heißen Produktgases in einen Abkühlraum des Reaktors zum Abkühlen des heißen Produktgases durch direkten Wärmeaustausch mit einem Kühlmedium;
c) Umströmen eines im Abkühlraum angeordneten Formkörpers mit zumindest einem Teil des abzukühlenden Produktgases;
d) Abziehen des abgekühlten Produktgases aus dem Abkühlraum, nachdem das abgekühlte Produktgas gemäß c) den Formkörper zumindest zum Teil umströmt hat.

20. Verfahren nach Anspruch 19, **dadurch gekennzeichnet, dass** das abgekühlte Produktgas entlang eines Zwischenbodens des Reaktors geführt wird, bevor es aus dem Abkühlraum abgezogen wird, wobei der Zwischenboden den Reaktionsraum und den Abkühlraum des Reaktors räumlich voneinander trennt.
